(19) Europäisches Patentamt / European Patent Office / Office européen des brevets

(11) **EP 2 066 707 B1**

(12) **EUROPÄISCHE PATENTSCHRIFT**

(45) Veröffentlichungstag und Bekanntmachung des Hinweises auf die Patenterteilung:
**14.07.2010 Patentblatt 2010/28**

(51) Int Cl.:
*C08F 6/00* (2006.01)          *C08L 25/04* (2006.01)
*C08L 39/06* (2006.01)

(21) Anmeldenummer: 07803353.7

(22) Anmeldetag: **10.09.2007**

(86) Internationale Anmeldenummer:
**PCT/EP2007/059435**

(87) Internationale Veröffentlichungsnummer:
**WO 2008/031779 (20.03.2008 Gazette 2008/12)**

(54) **VERFAHREN ZUR HERSTELLUNG VON CO-EXTRUDATEN AUS POLYSTYROL UND EINEM VERNETZTEN POLYVINYLPYRROLIDON MIT VERRINGERTEM STYROL-RESTMONOMERGEHALT**

METHOD FOR THE PRODUCTION OF CO-EXTRUDATES COMPOSED OF POLYSTYRENE AND OF A CROSSLINKED POLYVINYLPYRROLIDONE WITH REDUCED RESIDUAL STYRENE MONOMER CONTENT

PROCÉDÉ DE FABRICATION DE CO-EXTRUDATS CONSTITUÉS DE POLYSTYRÈNE ET DE POLYVINYLPYRROLIDONE RÉTICULÉE AVEC UNE TENEUR RÉDUITE EN MONOMÈRES STYRÈNE RÉSIDUELS

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **12.09.2006 EP 06120536**

(43) Veröffentlichungstag der Anmeldung:
**10.06.2009 Patentblatt 2009/24**

(73) Patentinhaber: **BASF SE**
**67056 Ludwigshafen (DE)**

(72) Erfinder:
• **MEFFERT, Helmut**
  **67273 Bobenheim am Berg (DE)**
• **PIEROBON, Marianna**
  **67063 Ludwigshafen (DE)**
• **ERK, Ates**
  **76131 Karlsruhe (DE)**
• **FEISE, Hermann Josef**
  **67259 Kleinniedesheim (DE)**
• **BAYER, Robert**
  **74889 Sinsheim (DE)**

(56) Entgegenhaltungen:
**EP-A- 1 354 900     WO-A-2006/097470**

## Beschreibung

Die vorliegende Erfindung betrifft ein Verfahren zur Herstellung von aus Polystyrol und einem vernetzten Polyvinylpyrrolidon-Polymeren erhaltenen Co-Extrudaten mit einem verringerten Styrol-Restmonomergehalt.

Polystyrol wird häufig im Zusammenhang mit Lebens- und Genussmitteln angewandt. So findet Polystyrol beispielsweise Verwendung als Filterhilfsmittel bei der Getränkeklärung. Auch Blends aus Polystyrol und vernetztem Polyvinylpyrrolidon finden Anwendung für diesen Zweck.

Allerdings weisen kommerziell erhältliche Polystyrol-Typen üblicherweise noch einen Restmonomeren-Gehalt im Bereich von einigen Hundert ppm auf.

Styrol kann aus der Luft in Mengen von 200 bis 400 ppm geruchsmäßig wahrgenommen werden. In Lebensmitteln wie beispielsweise Tee oder Fruchtnektar können bereits Mengen von 0.2 ppm sensorisch wahrgenommen werden.

Insofern kann es beim Einsatz von Polystyrol im Zusammenhang mit Lebensmitteln und Genussmitteln zu sensorischen Beeinträchtigungen kommen, wenn Styrol aus dem Polystyrol austritt.

In der WO 02/32544. werden beispielsweise Blends aus Polystyrol und vernetztem Polyvinylpyrrolidon beschrieben, die durch Compoundierung im Extruder erhalten werden. Auch solche Co-Extrudate weisen einen Restmonomeren-Gehalt an Styrol auf, der Anlass zu Verbesserungen gibt, vor allem da solche Produkte eine große spezifische Oberfläche im Bereich von 2 bis 8 m$^2$/g, bestimmt durch BAT-Messungen gemäß DIN 66131, aufweisen.

Bei Polystyrol, welches durch Lösungspolymerisation erhalten wird, erfolgt die Entfernung von Styrol üblicherweise durch Entgasung der Polymerlösung. Weiterhin kann der Gehalt an Styrol auch durch Entgasung einer Polystyrol-Schmelze im Extruder erniedrigt werden.

In der DE 808788 ist die Entfernung von flüchtigen Komponenten aus Polystyrol und Styrolcopolymerisaten durch Behandlung mit Wasserdampf beschrieben. Ziel dieses Verfahrens ist es, den Erweichungspunkt der Polymerisate heraufzusetzen.

In der JP-A 2002097362 ist die Desodorierung von Polyphenylenether/Polystyrol-Gemischen in Gegenwart von Wasser beschrieben, wobei die Behandlung bei Temperaturen von > 280°C in der Schmelze im Extruder erfolgt. Weiterhin ist auch in der EP-A 377115 die Herstellung von Blends aus Polyphenylenethem und Polystyrolen beschrieben, wobei die Entfernung von flüchtigen Substanzen wie Toluol und Styrol durch Dampfbehandlung des pelletisierten Blends in einem Extruder erfolgt.

In der DE 19537114 ist ein Verfahren zur Trocknung von thermoplastischen Polymerpulvern in der Schmelze in einem Mischapparat beschrieben.

Es hat sich gezeigt, dass mit bekannten Verfahren wie der Wasserbehandlung einer Schmelze im Extruder oder Entgasung der Schmelze der Restmonomerengehalt nicht im gewünschten Maße abgesenkt werden konnte.

In der Internationalen Anmeldung PCT/EP 2006/060703 wird ein Verfahren zur Senkung des Styrol-Restmonomerengehalts von Blends aus Polystyrol und vernetztem Polyvinylpyrrolidon durch Wasserdampfdestillation bei 100 bis 120 °C oder durch Behandlung einer wässrigen Aufschlämmung des Blends in einem Schaufeltrockner beschrieben. Auch wenn mit der dort beschriebenen Vorgehensweise der Styrolgehalt erfolgreich abgesenkt werden kann, so weisen die so behandelten Blends Nachteile hinsichtlich der resultierenden Filterwiderstände und Waschwiderstände auf.

Üblicherweise werden Füterwiderstände und Waschwiderstände, die einen, je nach technischem Anwendungsgebiet variierenden, bestimmten Wert übersteigen, in der Praxis als nicht akzeptabel angesehen. Bei der Bierfiltration sollten beispielsweise die Filter- und Waschwiderstände einen Wert von $10 \times 10^{12}$ mPas/m$^2$ möglichst nicht übersteigen.

Als Filterwiderstand bezeichnet man das Produkt aus Fluidviskosität und Durchströmungswiderstand während des Filterkuchenaufbaus, als Waschwiderstand das Produkt aus Fluidviskosität und Durchströmungswiderstand bei der Durchströmung des bereits gebildeten Filterkuchens. Die Bestimmung der entsprechenden Messwerte ist dem Fachmann bekannt und ist in der VDI-Richtlinie 2726 ausführlich beschrieben.

Aufgabe der vorliegenden Erfindung war es, ein verbessertes Verfahren zur Behandlung von Blends aus Polystyrol und vernetzten Polyvinylpyrrolidon-Polymeren zu finden, welches zu einem möglichst geringen Restmonomerengehalt an Styrol bei gleichzeitig gutem Verhalten hinsichtlich der Filter- und Waschwiderstände führt.

Demgemäß wurde ein Verfahren zur Verringerung des Styrol-Restmonomerengehalts in Co-Extrudaten aus Polystyrol und wasserunlöslichen vernetzten Polyvinylpyrrolidon-Polymeren gefunden, welches dadurch gekennzeichnet ist, dass man eine wässrige Suspension des teilchenförmigen festen Co-Extrudats bei Temperaturen von 60 bis 99 °C einer Wärmebehandlung unterwirft, wobei das Gewichtsverhältnis von festem Co-Extrudat zu Wasser in der Suspension 1:1,5 bis 1:20 beträgt, und die Konzentration der Suspension während der Behandlung konstant gehalten wird.

Vorzugsweise werden nach dem erfindungsgemäßen Verfahren Blends mit einem Restmonomerengehalt von < 20 mg/kg Styrol, besonders bevorzugt < 10 mg/kg, bezogen auf das Gesamtgewicht des Co-Extrudate, erhalten.

Als Co-Extrudate werden Mischungen von chemisch verschiedenen Polymeren bezeichnet, die durch gemeinsame Verarbeitung der Einzelkomponenten im Extruder erhalten werden. Im Falle der vorliegenden Erfindung bestehen die Co-Extrudate aus einer thermoplastischen Polystyrol-Komponente und einem nicht-thermoplastischen wasserunlöslichen vernetzten Polyvinylpyrrolidon, wobei die Co-Extrudate mit physikalischen Methoden nicht in die Einzelkomponenten zerlegt werden können. Bei der Co-extrusion wird die Polyvinylpyrrolidon-Komponente in dem aufgeschmolzenen Polystyrol dispergiert.

Als Polystyrol-Komponente kommen alle gängigen Polystyrol-Typen in Betracht, wie Standard-Polystyrol, schlagzähmodifiziertes Polystyrol (SB-Typen) wie Copolymere aus Styrol und Butadien oder hochschlagzähmodifiziertes Polystyrol (HIPS-Typen), beispielsweise mit Polybutadien-Kautschuk oder Styrol-Butadien-Kautschuk modifiziertes Polystyrol. Solche Polystyrole sind kommerziell erhältlich, beispielsweise als PS 158 k, PS 486 M oder Styrolux® (Fa. BASF). Weiterhin kann anionisch polymerisiertes Polystyrol eingesetzt werden.

Erfindungsgemäß enthalten die Co-Extrudate neben der Polystyrol-Komponente als zweite Polymer-Komponente in Wasser unlösliche, bei Wasseraufnahme nicht gelbildende, vernetzte Polyvinylpyrrolidon-Polymerisate, die in der Literatur auch als sogenannte Popcorn-Polymere bezeichnet werden (Vgl. J.W. Breitenbach, Chimia, Vol. 21, S. 449-488, 1976). In den Pharmakopöen wie USP oder Ph.Eur. werden solche Polymerisate als Crospovidone bezeichnet. Solche Polymere weisen eine poröse Struktur auf und sind reich an Hohlräumen. Die Polymere sind wie gesagt auch bei Wasseraufnahme nicht gelbildend. Das Quellvolumen solcher Polymerisate in Wasser bei 20 °C liegt üblicherweise im Bereich von 2 bis 10 l/kg, vorzugsweise bei 4 bis 8 Ilkg.

Die Herstellung von Popcorn-Polymeren ist an sich bekannt. Ob eine Polymerisation zu Popcorn-Polymeren anstelle von glasartigen Polymeren führt, wird wesentlich durch die Verfahrensführung beeinflusst. Geeignete Verfahren zur Herstellung von Popcorn-Polymeren wie sie im Rahmen der vorliegenden Erfindung eingesetzt werden, sind beispielsweise in der EP-B 88964 beschrieben.

Bei den Popcorn-Polymeren handelt es sich wie gesagt um vernetzte Polymere. Die Vernetzung kann sowohl physikalisch als auch chemisch erfolgen. Als chemische Vernetzter eignen sich generell Verbindungen, die mindestens zwei ethylenisch ungesättigte nichtkonjugierte Doppelbindungen im Molekül enthalten und somit als difunktionelle Vernetzer bei der Polymerisation wirken. Bevorzugte Vertreter sind beispielweise Alkylenbisacrylamide wie Methylen-bisacrylamid und N,N'-Acryloylethylendiamin, N,N'-Divinylethylenharnstoff, N,N'-Divinylpropylenhamstoff, Ethyliden-bis-3-(N-Vinylpyrrolidon), N,N'-Divinylimidazolyl(2,2')butan und 11'-bis-(3,3')vinyl benzimidazo-lith-2-on)1,4-butan. Weitere geeignete Vernetzer sind beispielsweise Alkylenglycoldi(meth)-acrylate wie Ethylenglykoldiacrylat, Ethylenglykoldimethacrylat, Tetraethylenglykoldiacrylat, Tetraethylenglykoldimethacrylat, Diethylenglykoldiacrylat,Diethylenglykoldimethacrylat, aromatische Divinylverbindungen wie Divinylbenzol und Divinyltoluol sowie Vinylacrylat, Allylacrylat, Allylmethacrylat, Divinyldioxan, Pentaerythrittriallylether, Triallylamine sowie Gemische der Vernetzer.

Besonders bevorzugte Vernetzer sind Ethylenglykoldiacrylat, Ethylenglykoldimethacrylat, N,N'-Divinylethylenharnstoff (DVEH) und Divinylbenzol (DVB).

Die Vernetzer werden in Mengen von 0 bis 10 gew.-%, bevorzugt =, 1 bis 8 gew.-%, besonders bevorzugt 0,2 bis 5 Gew.-%, bezogen auf die Gesamtmenge des Polymerisats eingesetzt.

Solche Crospovidone sind kommerziell erhältlich, beispielsweise als Divergan®-Typen, Fa. BASF oder Polyplasdone®-Typen, Fa. ISP.

Die Popcorn-Polymere weisen im allgemeinen Korngrößen von 15 $\mu$m bis 1500 $\mu$m auf:

Die Polymer-Blends werden wie bereits ausgeführt bevorzugt durch Compoundierung im Extruder, also durch Co-Extrusion des Polystyrols mit dem vernetzten Polymer erhalten. Bei der Compoundierung wird das nicht thermoplastische Popcorn-Polymer in der Schmelze des thermoplastischen Polystyrols dispergiert. Die Verarbeitung erfolgt bei Temperaturen, die über der Glasübergangstemperatur der Polystyrol-Komponente, aber unterhalb der Zersetzungstemperatur der Popcorn-Polymere liegen. Üblicherweise werden die Co- Extrudate bei Manteltemperaturen von 180 bis 220 °C erhalten. Vorzugsweise erfolgt die Verarbeitung in einem Doppelschneckenextruder. Die Co-extrusion kann auch in Gegenwart von bis zu 10 Gew.%, bezogen auf die Gesamtmenge der Polymeren, an Wasser erfolgen. Die erhaltenen körnigen Co- Extrudate können in einem zusätzlichen Schritt zum Pulvern gemahlen werden. Vorzugsweise werden bei der Filtration Mischungen aus Blends mit unterschiedlichen mittleren Teilchengrößen eingesetzt.

Die Co- Extrudate weisen vor der Behandlung mit dem erfindungsgemäßen Verfahren üblicherweise Restmonomerengehalte von 100 bis 500 ppm Styrol auf.

Die Behandlung gemäß dem erfindungsgemäßen Verfahren erfolgt dergestalt, dass während der Behandlung der teilchenförmige Zustand der Co- Extrudate erhalten bleibt. Die Co- Extrudate werden nicht geschmolzen, sondern verbleiben in einem teilchenförmigen festen Zustand.

Die Wärmebehandlung zur Entfernung des Restmonomeren wird an einer bewegten Suspension durchgeführt. Die Suspension kann beispielsweise mit Hilfe eines Rührers in Bewegung gehalten werden, sodass während der Behandlung eine Durchmischung des zu behandelnden Guts erfolgt. Geeignete Rührer sind beispielsweise Ankerrührer, Balkenrührer, Propellerrührer, Scheibenrührer, Impellerrührer, Kreuzbalkenrührer, Blattrührer, Schrägblattrührer, Gitterrührer, Wendelrührer, Zahnscheibenrührer und Turbinenrührer und dergleichen.

Weiterhin kann die Suspension durch Durchleiten von inerten Gasströmen in Bewegung gehalten werden.

Zur Durchführung der Restmonomerenentfernung werden die Co- Extrudate in einem geeigneten Behälter, vorzugsweise einem Rührkessel, mit Wasser in einem Verhältnis von Co- Extrudate zu Wasser von 1:1,5 bis 1:20, vorzugsweise 1:2,3 bis 1:4 ( Polymere: Wasser [kg:kg]) vermischt.

Als Wasser kann beispielsweise Leitungswasser, vollentsalztes (VE) Wasser oder doppelt destilliertes Wasser verwendet werden.

Die so entstandene wässrige Suspension wird einer Wärmebehandlung unterworfen, wodurch es zu einer Verdunstung oder Verdampfung von Wasser aus der Suspension kommt. Die Wärmebehandlung erfolgt so, dass die Innentemperatur, also die Temperatur der wässrigen Suspension 60 bis 99 °C, vorzugsweise 80 bis 95°C, beträgt.

Die Einhaltung der Innentemperatur kann auf verschiedene Weise erfolgen, beispielsweise durch Beheizen der Apparatewände. Weiterhin kann Wasserdampf in die Suspension geleitet werden oder ein inerter Gasstrom, dessen Temperatur so eingestellt wird, dass die gewünschte Inntemperatur eingehalten wird. Als Inertgase eignen sich zum Beispiel Stickstoff, Luft oder Argon.

Das verdunstende/verdampfende Wasser wird üblicherweise außerhalb des Rührkessels wieder kondensiert. Die Konzentration der Suspension wird dabei jedoch konstant gehalten. Konstant bedeutet in diesem Zusammenhang, dass die Konzentration um nicht mehr als +/- 10 Gew.-% von der ursprünglichen Konzentration abweicht. Die Konstanthaltung der Konzentration wird durch gezielte Zuführung von Wasser erreicht. Dies kann eine Zuführung von Frischwasser sein oder auch eine partielle oder vollständige Rückführung des abdestillierten Wassers. Auch über eine gezielte Einleitung von Wasserdampf kann die Konzentration konstant gehalten werden.

Bevorzugt erfolgt die Wärmebehandlung in Gegenwart eines Dampf- oder Inertgasstroms, der durch die Suspension geleitet wird. Als Inertgase eignen sich die oben erwähnten Gase.

Bei der Behandlung wird der Druck im Apparat so gewählt, dass ein Absolutdruck von 0.02 MPa bis 0,11 MPa vorliegt.

Nach der Behandlung kann man die Co-Extrudate durch Abfiltrieren vom Wasser abtrennen und anschließend trocknen, gegebenenfalls unter Vakuum, bei Temperaturen von bis zu 100°C. Wenn man die Behandlung für feinteilige, pulverförmige Co- Extrudate einsetzt, kann man nach der Behandlung die wässrige Suspension der Co- Extrudate mittels Sprühtrocknung ohne Filtrationsschritt direkt trocknen.

Die Behandlungsdauer richtet sich nach der gewählten Temperatur und der Menge des zu behandeinden Co-Extrudats. Üblicherweise liegt die Behandlungszeit im Bereich von mehreren Stunden mindestens 30 min, vorzugsweise mindestens eine Stunde. Für die Erhaltung der Filtereigenschaften des eingesetzten Materials ist es vorteilhaft, dass die Behandlungszeit weniger als 10 Stunden, vorzugsweise weniger als 8 Stunden beträgt.

Vorzugsweise erfolgt die Behandlung im Batch-Verfahren. Es kann beispielsweise aber auch eine Rührkesselkaskade zum Einsatz kommen.

Bei der Behandlung liegen die Co- Extrudate in der wässrigen Aufschlämmung als diskrete Partikel vor. Auch wenn die Behandlungstemperatur teilweise, je nach Art der Polystyrol-Komponente, im Bereich der Glasübergangstemperatur der Polystyrol-Komponente des Co-Extrudat liegt, bildet sich üblicherweise keine Schmelze, sodass die Teilchengrößenverteilung des Co-Extrudat erhalten bleibt

Der Restmonomeren-Gehalt der nach dem erfindungsgemäßen Verfahren erhaltenen Co- Extrudate beträgt <10 ppm (<10 mg/kg).

Überraschenderweise ließen sich die Co- Extrudate aus Polystyrol und Crospovidone auf die erfindungsgemäße Weise behandeln, ohne dass es zu einer Beeinträchtigung der Morphologie und der Stabilität der Co- Extrudate kam. Angesichts der Fähigkeit der vernetzten Polymerkomponente Wasser aufzunehmen und teilweise einen erheblichen Quelldruck zu entwickeln, hätte der Fachmann eigentlich mit einer Entmischung des Co-Extrudats und einer Zerstörung der Hohlraumstruktur gerechnet

Aufgrund des sehr niedrigen Restmonomerengehalts von < 10 ppm eignen sich die nach dem erfindungsgemäßen Verfahren erhaltenen Co- Extrudate hervorragend für den Einsatz im Zusammenhang mit Nahrungs- und Genussmitteln, beispielsweise als Filterhilfsmittel bei der Behandlung von Getränken wie Fruchtsäften, Bier, Wein und Schaumweinen, Teeprodukten oder andere Verfahren zur Adsorption von unerwünschten Inhaltsstoffen aus Nahrungs- und Genussmitteln.

Der besondere Vorteil des erfindungsgemäßen Verfahrens liegt darin, dass die Behandlung keine negativen Auswirkungen auf die sich bei der Filtration ergebenden Filterwiderstände hat.

Beispiele

Die Bestimmung des Rest-Styrols wurde mit folgender Methode durchgeführt:

Die Analysen Probe wurde im N,N-Dimethylacetamid (DMAA) gelöst und mit Headspace-Gaschromatographie untersucht. Die gaschromatographische Trennung erfolgte auf einer Fused-Silica-Kapillare mit einem Film aus Polydimethylsiloxan. Zur Detektion wurde ein Flammenionisationsdetektor eingesetzt. Es wurde nach der Standardadditionsmethode quantifiziert.

Auf diese Weise wurde der Restgehalt Styrol W, bezogen auf die feuchte Probe, bestimmt. Um den Rest-Styrol Wert bezogen auf den Feststoff zu erhalten, wurde rechnerisch noch der Feststoffgehalt berücksichtigt:

a)

$$\text{Rest Styrol [mg/kg]} = FG \times W/FG$$

Für die Polymer-Blends kann man den Rest Styrol Anteil bezogen auf Polystyrol berechnen. In den Beispielen unten beträgt der Anteil an Polystyrol im Polymer-Blend 70%.

b)

$$\text{Rest Styrol bez. auf Polystyrol [mg/kg]} = \text{Rest Styrol (a)} / \text{Polystyrol Anteil}$$

Die in den folgenden Beispielen eingesetzten Co-Extrudate wurden durch Co-Extrusion von 70 Gew.-% Polystyrol PS 158K und 30 Gew.-% Crospovidone, bezogen auf die Gesamtmenge an Polymeren im Co-Extrudat, erhalten.

Die mittlere Partikelgrössenverteilung (X50) erfolgte mit einem Maivern-Mastersizer.

Die Bestimmung der Filter- und Waschwiderstände erfolgte gemäß der VDI-Richtlinie 2726.

Beispiel 1:

In einen beheizbaren mit einem Balkenrührer ausgestatteten 5 Liter Laborrührbehälter wurden 3000 g VE Wasser vorgelegt und 1100 g teilchenförmiges Co-Extrudat (X50: 46 μm) mit einem Styrolgehalt von 150 ppm eingerührt. Die Rührerdrehzahl betrug 500 U/min.

Die Wandung des Rührbehälters wird mit 115°C heißem Wärmeträgeröl beheizt. In die gerührte Suspension wurde 0,8 kg/h Wasserdampf mit einer Temperatur von 122 °C eingeleitet. Während des Prozesses beträgt die Temperatur der Suspension 95 °C. Die aus dem Rührbehälter abgedampfte Wassermenge (ca. 0,8 kg/h), wurde in einem, dem Rührbehälter nachgeschalteten Kondensator auskondensiert. Der Stand im Rührbehälter wurde durch regelmäßiges Nachfüllen mit frischem, aufgeheizten Wasser konstant gehalten. Nach 3 Stunden war ein Styrolgehalt von 4 ppm im Crosspure erreicht.

Die wässrige Co-Extrudatsuspension wurde in einem Laborsprühturm bei Gaseintrittstemperaturen im Bereich von 140 °C und Gasaustrittstemperaturen im Bereich von 70 °C auf eine Restfeuchte < 5 Gew. % Wasser getrocknet.

Eine Änderung der Partikelgrößenverteilung, bezogen auf das eingesetzte Produkt wurde nicht festgestellt.

Beispiel 2:

In einen beheizbaren mit einem Balkenrührer ausgestatteten 5 Liter Laborrührbehälter wurden 3000 g doppeltes destilliertes Wasser vorgelegt und 1100 g Teilchenförmige Polymerblends (X50: 44 μm) mit einem Styrolgehalt von 150 ppm eingerührt. Die Rührerdrehzahl betrug 600 U/min.

Die Wandung des Rührbehälters wurde mit 110°C heißem Wärmeträgeröl beheizt. In die gerührte Suspension wurde 0,4 m³/h Luft als inertes Gas mit einer Temperatur von 115 °C eingeleitet. Während des Prozesses beträgt die Temperatur der Suspension 80 °C. Die aus dem Rührbehälter abgedampfte Wassermenge (ca. 0,3 kg/h), wurde in einem, dem Rührbehälter nachgeschalteten Kondensator, auskondensiert. Der Stand im Rührbehälter wurde durch regelmäßiges Nachfüllen mit frischem, aufgeheizten Wasser konstant gehalten, Nach 7 Stunden war ein Styrolgehalt von 2 ppm im Co-Extrudat erreicht.

Die wässrige Co-Extrudatsuspension wurde in einem Laborsprühturm bei Gaseintrittstemperaturen im Bereich von 140°C und Gasaustrittstemperaturen im Bereich von 70 °C auf eine Restfeuchte < 5 Gew. % Wasser getrocknet.

Eine Änderung der Partikelgrößenverteilung, bezogen auf das eingesetzte Produkt wurde nicht festgestellt.

Beispiel 3:

In einen beheizbaren mit einem Balkenrührer ausgestatteten 5 Liter Laborrührbehälter wurden 3000 g VE Wasser vorgelegt und 1100 g Teilchenförmige Polymerblends (X50: 30 µm) mit einem Styrolgehalt von 170 ppm eingerührt. Die Rührerdrehzahl betrug 450 U/min.

Die Wandung des Rührbehälters wurde mit 115 °C heißem Wärmeträgeröl beheizt. In die gerührte Suspension wurde 0,6 m³-/h Luft als inertes Gas mit einer Temperatur im Bereich von 100°C eingeleitet. Während des Prozesses beträgt die Temperatur der

Suspension 88 °C. Die aus dem Rührbehälter abgedampfte Wassermenge im Bereich von 0,4 kg/h wurde in einem, dem Rührbehälter nachgeschalteten Kondensator, auskondensiert. Der Stand im Rührbehälter wurde durch regelmäßiges Nachfüllen mit frischem, auf Suspensionstemperatur aufgeheizten Wasser konstant gehalten.

Nach 5 Stunden war ein Styrolgehalt von 4 ppm im Co-Extrudat erreicht.

Die wässrige Co-Extrudatsuspension wurde in einem Laborsprühturm bei Gaseintrittstemperaturen im Bereich von 140 °C und Gasaustrittstemperaturen im Bereich von 70 °C auf eine Restfeuchte < 5 Gew. % Wasser getrocknet.

Eine Änderung der Partikelgrößenverteilung, bezogen auf das eingesetzte Produkt wurde nicht festgestellt.

Beispiel 4:

In einen beheizbaren 5 Liter Laborrührbehälter wurden 3000 g Wasser vorgelegt und 1100 g Teilchenförmige Polymerblends (X50: 30 µm) mit einem Styrolgehalt von 170 ppm eingerührt.

Die Rührerdrehzahl beträgt 550 U/min.

Die Wandung des Rührbehälters wurde mit 100°C heißem Wärmeträgeröl beheizt. In die gerührte Suspension wurde 0,5 kg/h Wasserdampf mit einer Temperatur im Bereich von 105°C eingeleitet. Während des Prozesses beträgt die Temperatur der Suspension 91°C. Die aus dem Rührbehälter abgedampfte Wassermenge (ca. 0,45 kg/h), wurde in einem, dem Rührbehälter nachgeschalteten Kondensator, auskondensiert.

Der Stand im Rührbehälter wurde durch regelmäßiges Nachfüllen mit frischem, auf Suspensionstemperatur aufgeheiztem Wasser konstant gehalten. Nach 5 Stunden war ein Styrolgehalt von 2 ppm im Co-Extrudat erreicht.

Die wässrige Suspension wurde in einem Laborsprühturm bei Gaseintrittstemperaturen im Bereich von 140 °C und Gasaustrittstemperaturen im Bereich von 70 °C auf eine Restfeuchte < 5 Gew. % Wasser getrocknet.

Eine Änderung der Partikelgrößenverteilung, bezogen auf das eingesetzte Produkt wurde nicht festgestellt.

Anwendungsbeispiele: Filtration von unfiltriertem Bier

Filterwiderstand: F-W

Waschwiderstand: W-W

| Beispiel | F-W [mPas/m$^2$] vor Behandlung | W-W [mPas/m$^2$] vor Behandlung | F-W [mPas/m$^2$] nach Behandlung laut Beispiel | W-W [mPas/m$^2$] nach Behandlung laut Beispiel |
|---|---|---|---|---|
| 1 | 1,92x $10^{12}$ | 1,82x $10^{12}$ | 4,45x $10^{12}$ | 4,48x $10^{12}$ |
| 2 | 1,92x $10^{12}$ | 1,82x $10^{12}$ | 6,71x$10^{12}$ | 6,36x $10^{12}$ |
| 3 | 4,80x $10^{12}$ | 5.00x$10^{12}$ | 3,61x $10^{12}$ | 3,70x$10^{12}$ |
| 4 | 4,80x $10^{12}$ | 5,00x $10^{12}$ | 6,60x $10^{12}$ | 6,60x $10^{12}$ |

Die Mischung aus

27,5 Gew. -% Polymerblend aus Beispiel 3

27,5 Gew.-% Polymerblend aus Beispiel 4

22,5 Gew.-% Polymerblend aus Beispiel 1

22,5 Gew.-% Polymerblend aus Beispiel 2

zeigte folgende Eigenschaften:

Filterwiderstand: 4,58 $10^{12}$ mPas/m$^2$

Waschwiderstand: 4,54 $10^{12}$ mPas/m$^2$

Die Bier-Filtration wurde mit Material gemäß dieser Mischung durchgerührt

Die Filtrationswirkung wurde an unfiltriertem Bier (EBC Wert: 108 (125°C), 72.9 (90°C)) bestimmt. Die Untersuchung wurde als Anschwemmfiltration mittels eines Pilotkerzenfilters (Spaltweite 70 $\mu$m, Filterfläche 0,032 m$^2$, Durchsatz 15 1/h, flächenspezifischer Durchsatz im Bereich von 470 l/(m$^2$h) durchgeführt. (Das Filtrat gilt als klar, wenn der EBC-Wert weniger als 1 beträgt.) Außerdem wurde die Durchflussrate gemessen. Es zeigte sich, dass das Material eine ebenso gute Filtrationswirkung wie Kieselgur entfaltet. Der EBC-Wert für das resultierende Filtrat betrug 2.08 (25 °C) und 0.68 (90°C).

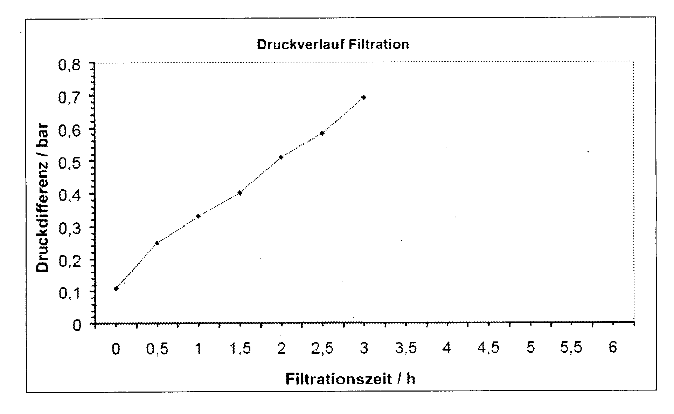

Außerdem wurde die Durchflussrate gemessen. Der Druckverlauf während der Filtration ist in der Figur dargestellt.

## Patentansprüche

1. Verfahren zur Entfernung von Styrol-Restmonomeren aus Polystyrol und wasserunlösliches, vernetztes Polyvinylpyrrolidon enthaltenden Co-Extrudaten, **dadurch gekennzeichnet, dass** man eine wässrige Suspension des teilchenförmigen festen Co-Extrudats bei Temperaturen von 60 bis 99°C einer Wärmebehandlung unterwirft, wobei das Gewichtsverhältnis von festem Co-Extrudat zu Wasser in der Suspension 1:1,5 bis 1:20 beträgt, und die Konzentration der Suspension während der Behandlung konstant gehalten -wird, die Wärmebehandlung zur Entfernung des Restmonomeren an einer bewegten Suspension durchgeführt wird und der Druck bei der Behandlung im Apparat so gewählt wird, dass ein Absolutdruck von 0.02 MPa bis 0.11 MPa vorliegt.

2. Verfahren nach Anspruch 1, **dadurch gekennzeichnet, dass** man die Behandlung in Gegenwart von Wasserdampf durchführt.

3. Verfahren nach Anspruch 1 oder 2, **dadurch gekennzeichnet, dass** die Behandlung in Gegenwart eines Inertgases erfolgt.

4. Verfahren nach einem der Ansprüche 1 bis 3, **dadurch gekennzeichnet, dass** die Mischung aus Co-Extrudat und Wasser in einem Gewichtsverhältnis von 1: 2.3 bis 1:4 hergestellt wurde.

5. Verfahren nach einem der Ansprüche 1 bis 4, **dadurch gekennzeichnet, dass** die Wärmebehandlung bei Temperaturen von 80 bis 95°C durchgeführt wird.

6. Verfahren nach einem der Ansprüche 1 bis 5, **dadurch gekennzeichnet, dass** im Anschluss an die Behandlung das teilchenförmige Co-Extrudat durch Filtration abgetrennt und getrocknet wird.

7. Verfahren nach einem der Ansprüche 1 bis 5 , **dadurch gekennzeichnet, dass** im Anschluss an die Wärmebehandlung durch Sprühtrocknung ein pulverförmiges Co-Extrudat erhalten wird.

8. Verfahren nach einem der Ansprüche 1 bis 7, **dadurch gekennzeichnet, dass** das Co-Extrudat 50 bis 90 Gew.% eines Polystyrols und 10 bis 50 Gew.-% eines wasserunlöslichen vernetzten Polyvinylpyrrolidons enthält.

9. Verfahren nach einem der Ansprüche 1 bis 7, **dadurch gekennzeichnet, dass** das Co-Extrudat als Polystyrol Standardpolystyrol, mit Kautschuk hochschlagzähmodifiziertes Polystyrol oder ein Styrol-Butadien-Copolymerisat enthält.

## Claims

1. A method for removing residual styrene monomers from co-extrudates comprising polystyrene and water-insoluble, crosslinked polyvinylpyrrolidone, which comprises subjecting an aqueous suspension of the particulate solid co-extrudate to a heat treatment at temperatures of 60 to 99°C, the weight ratio of solid co-extrudate to water in the suspension being 1:1.5 to 1:20, and the concentration of the suspension being kept constant during the treatment, the heat treatment for removing the residual monomer being carried out on an agitated suspension and the pressure in the treatment in the apparatus being selected in such a manner that an absolute pressure from 0.02 MPa to 0.11 MPa is present.

2. The method according to claim 1, wherein the treatment is carried out in the presence of steam.

3. The method according to claim 1 or 2, wherein the treatment is performed in the presence of an inert gas.

4. The method according to one of claims 1 to 3, wherein the mixture of co-extrudate and water was produced in a weight ratio of 1:2.3 to 1:4.

5. The method according to one of claims 1 to 4, wherein the heat treatment is carried out at temperatures from 80 to 95°C.

6. The method according to one of claims 1 to 5, wherein, subsequently to the treatment, the particulate co-extrudate is separated off by filtration and dried.

7. The method according to one of claims 1 to 5, wherein, subsequently to the heat treatment, a pulverulent co-extrudate is obtained by spray drying.

8. The method according to one of claims 1 to 7, wherein the co-extrudate comprises 50 to 90% by weight of a polystyrene and 10 to 50% by weight of a water-insoluble crosslinked polyvinylpyrrolidone.

9. The method according to one of claims 1 to 7, wherein the co-extrudate, as polystyrene, comprises standard polystyrene, rubber-modified high impact polystyrene, or a styrene-butadiene copolymer.

**Revendications**

1. Procédé pour l'élimination de monomères styrène résiduels à partir de co-extrudats contenant du polystyrène et de la polyvinylpyrrolidone réticulée insoluble dans l'eau, **caractérisé en ce qu'**on soumet à un traitement thermique à des températures de 60 à 99°C une suspension aqueuse du co-extrudat solide particulaire, le rapport pondéral du co-extrudat solide à l'eau dans la suspension valant de 1:1,5 à 1:20, et la concentration de la suspension étant maintenue constante pendant le traitement, le traitement thermique pour l'élimination du monomère résiduel étant effectué sur une suspension mise en mouvement et la pression lors du traitement dans l'appareil étant choisie de manière que soit présente une pression absolue de 0,02 MPa à 0,11 MPa.

2. Procédé selon la revendication 1, **caractérisé en ce qu'**on effectue le traitement en présence de vapeur d'eau.

3. Procédé selon la revendication 1 ou 2, **caractérisé en ce que** le traitement s'effectue en présence d'un gaz inerte.

4. Procédé selon l'une quelconque des revendications 1 à 3, **caractérisé en ce que** le mélange de co-extrudat et d'eau a été préparé en un rapport pondéral de 1:2,3 à 1:4.

5. Procédé selon l'une quelconque des revendications 1 à 4, **caractérisé en ce que** le traitement thermique est effectué à des températures de 80 à 95 °C.

6. Procédé selon l'une quelconque des revendications 1 à 5, **caractérisé en ce qu'**à la suite du traitement le co-extrudat particulaire est séparé par filtration et séché.

7. Procédé selon l'une quelconque des revendications 1 à 5, **caractérisé en ce qu'**à la suite du traitement thermique on obtient par séchage par atomisation un co-extrudat pulvérulent.

8. Procédé selon l'une quelconque des revendications 1 à 7, **caractérisé en ce que** le co-extrudat contient de 50 à 90 % en poids d'un polystyrène et de 10 à 50 % en poids d'une polyvinylpyrrolidone réticulée insoluble dans l'eau.

9. Procédé selon l'une quelconque des revendications 1 à 7, **caractérisé en ce que** le co-extrudat contient en tant que polystyrène du polystyrène standard, du polystyrène modifié hautement antichoc avec du caoutchouc ou un copolymère styrène-butadiène.

**Druckverlauf Filtration**

*Y-axis: Druckdifferenz / bar*

*X-axis: Filtrationszeit / h*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0232544 A
- DE 808788
- JP 2002097362 A
- EP 377115 A
- DE 19537114
- EP 2006060703 W
- EP 88964 B

**In der Beschreibung aufgeführte Nicht-Patentliteratur**

- **J.W. Breitenbach.** *Chimia,* vol. 21, 449-488